# EUROPEAN PATENT SPECIFICATION

(11) **EP 1 917 209 B1**
(45) Date of publication and mention of the grant of the patent: **03.06.2015**
(21) Application number: 05814113.6
(22) Date of filing: 23.08.2005
(51) Int. Cl.: C01B 25/30, A62D 3/33, A62D 3/37

(54) **MINERALIZATION OF ALKALI METALS, SULFUR AND HALOGENS**
MINERALISIERUNG VON ALKALIMETALLEN, SULFUR UND HALOGENEN
MINERALISATION DE METAUX ALCALINS, DE SOUFRE ET D'HALOGENES

(43) Date of publication of application: 07.05.2008
(73) Proprietor: Studsvik, Inc., Atlanta, GA 303452 (US)
(72) Inventor: MASON, J. Bradley, Pasco, Washington 99301 (US)
(74) Representative: Carpmaels & Ransford LLP
(86) International application number: PCT/US2005/030012
(87) International publication number: WO 2007/024218

(56) References cited:
- EP-A- 0 296 616
- WO-A-00/29071
- CA-A1- 2 084 710
- DE-A1- 3 800 616
- US-A- 4 544 375
- US-A- 5 059 404
- US-A1- 2005 096 495

## Description

### BACKGROUND OF THE INVENTION

The present invention relates generally to a process for treating wastes containing alkali metals, sulfur, heavy metals, boron compounds, and halogens. More specifically, the invention relates to a process for converting alkali metals, sulfur, heavy metals, and halogens into stable mineral forms through the use of a fluidized bed.

There exist many hazardous waste materials that are difficult to dispose because of the possibility that they may contaminate the environment. Such hazardous materials include compounds like heavy metals, sulfur, and halogens. These materials can be commonly found in many wastes, products, and compounds.

Typically, such hazardous waste is either buried or burned, both of which can be costly processes. Accordingly, it is desirable to process such wastes into materials that are more easily disposed of at lower costs. A large number of methods for treatment of such materials are known.

Alkali metals, which refer primarily to the elements of sodium and potassium, sulfur, and halogens are commonly found in such waste feed materials as sodium nitrate, potassium nitrate, sodium sulfates, and sodium chloride. In the past, such waste materials have typically been treated through processes like pyrolysis, incineration, and catalytic cracking. The catalytic cracking methods suffer from the draw back that they can only be used for treating materials having low contents of halogen-containing polymer materials. Further the cracking method is very expensive, and large acid resistant plants are needed for carrying out the method. Incineration processes are also disadvantageous, because these processes are becoming unacceptable from an environmental standpoint. Incinerators and related processes that utilize open-flame combustion fall under stringent and comprehensive air pollution laws that typically render the incinerators economically infeasible.

Pyrolysis methods are generally more flexible and can be used for the treatment of most waste materials. However, secondary waste streams that are generated from these processes, such as particulate waste and off gases, still present disposal issues that must be addressed.

Another problem associated with prior art waste processing methods involves sulfur-containing compounds. For example, the presence of such sulfur compounds in a vitrification melter can cause a molten sulfur salt pool to accumulate on top of the molten inorganic residue (glass). This pool causes high corrosion rates for the melter equipment. The pool can also have a high electrical conductivity, which causes short-circuiting of the heating electrodes in the melter. Additionally, potentially explosive conditions can result if large quantities of water contact the molten sulfur salt pool.

Further, the presence of heavy metals in the inorganic residues that may be present in the waste feeds can render the final waste product hazardous, thereby requiring additional processing of the residue before disposal or higher disposal costs. Also, the inorganic residue can contain soluble components that may form aqueous solutions after processing; these solutions can result in contamination of the surroundings after disposal.

Accordingly, there remains a need for a process that does not have the limitations and shortcomings of the above described methods for processing waste materials containing alkali metals, heavy metals, halogens, and sulfur.

### SUMMARY OF THE INVENTION

The present invention provides a process as defined in claim 1.

According to its major aspects and briefly recited, the present invention is a method for converting alkali metals, heavy metals, halogens, and sulfur to synthetic, naturally occurring mineral products, and, preferably, water-insoluble mineral products, through the use of a non-incineration, fluid bed reactor. To initiate the process, heterogenous waste containing a mixture of sulfur, alkali metals, heavy metals, and halogens, is fed into the reactor along with a fluidizing gas composed of steam and, preferably, superheated steam. Optionally, the steam can be generated from the evaporation of water from the waste feed, while the fluidizing gases can be an inert gas or gases.

In addition to the introduction of steam and waste feed, co-reactants, such as clay and lime, are mixed with the heterogenous waste feed or separately introduced into the fluid bed reactor. In the context of this discussion, the term "co-reactants" refers to compounds that are reacted with the alkali metals, heavy metals, sulfur, and halogens to form synthetic naturally occurring mineral products. Not only can these co-reactants be used to form stable minerals, but they may also be used to achieve higher melting point solid products. After the mineral products are formed within the fluid bed reactor, the larger solid products are removed from the bottom of the reactor and thereafter disposed. Any undersized product that is potentially formed and that is carried out through the gas stream generated by the process can be recycled to the reaction vessel where it can be made to grow larger for more convenient disposal.

In the preferred embodiment of the present invention, a single vessel containing fluidized media is utilized. This fluidized media includes such materials as inert media, reductants, and catalysts. Preferably, the fluid bed reactor is operated under reducing conditions, and endothermic reactions, rather than exothermic, oxidizing reactions, are employed to convert the alkali metals, heavy metals, sulfur, and halogens into stable minerals. Although the waste feed may contain little or no carbonaceous materials, carbonaceous materials are present in the reaction vessel and are used as the heat source to evaporate water in the waste feed. Carbonaceous materials also act as reductants to regenerate metal catalysts within the fluidized bed. Optionally, a portion of the fluid bed can be operated under oxidizing conditions so as to avoid the release of synthesis gases such as H₂ and CO. However, at least one reducing portion must also be present in the case there is an oxidizing zone being employed.

A feature of the present invention is the use of fluidized media that can be any combination of carbonaceous materials, product solids, inert media, co-reactants, and catalysts. Depending on the relative proportions of alkali metals, heavy metals, halogens, and sulfur present within the heterogenous waste feed, the process can be optimized by using various combinations of fluidized media.

Another feature of the present invention is the use of co-reactants and/or additives, such as lime, calcium compounds, clay, magnesium compounds, aluminum compounds, phosphate compounds, iron compounds, and silica compounds, to form higher melting point solid products, as well as synthetic naturally occurring minerals that are preferably water-insoluble. The formation of water-insoluble minerals is advantageous because they are more easily disposed of and processed. Typically, water-soluble compounds that also contain radioactive isotopes will most likely require further stabilization prior to disposal to prevent water dissolution of the buried product into the ground water. Further, the formation of higher melting point compounds helps to prevent formation of large agglomerations in the reaction vessel. Although some agglomeration is preferred to increase the size of the mineral products, agglomeration to the point of ceasing the fluidization of the reactor is not desirable. The method of the present invention also provides for the conversion of reactive metals and compounds into stable compounds. Such compounds as metallic sodium, potassium, calcium, magnesium, plutonium, uranium, and compounds, such as cyanide, are potentially reactive materials that can ignite, burn, or even explode when exposed to certain other materials or when exposed to varied environmental conditions.

The mixing of the co-reactants with the heterogenous waste before introducing these materials into the reaction vessel is also a feature of the present invention. Although it is possible to also introduce the co-reactants directly to the reaction vessel rather than mixing with the waste, the mixing of the effective amount of co-reactants, such as clay and lime, with wastes containing alkali metals, heavy metals, halogens, and sulfur, allows these waste materials to be bound in stable mineral form. Not only does this feature result in easier disposal of the heterogenous waste, but also the process results in little to no inventory of unreacted co-reactant in the reaction bed. Accordingly, the amount of co-reactants within the fluid bed can be controlled so that agglomeration can occur so that the mineral products can be made to grow larger. Further, the final product weight can be controlled if there is not a large inventory of un-reacted, or unbound co-reactants. However, the presence of small amounts of co-reactants can help prevent agglomeration to the point of ceasing the fluidization of the reactor.

Yet another feature of the present invention is the use of fluid bed reactor having at least one reducing, or oxygen-starved, zone or portion. The use of a reducing zone is preferable so as to avoid incineration and/or burning operation. Further, it is believed that reducing conditions result in a higher retention of sulfur, halogens, and heavy metals in the mineralized product. Finally, in the case that the waste feed also contains nitrates or nitrogen containing compounds, the reducing conditions prevent the formation of nitrogen oxides (NOx) by directly converting nitrates to nitrogen gas.

The use of carbonaceous reductants to regenerate co-reactants and/or additives is also a feature of the present invention. For example, carbonaceous reductants can be used to reduce Fe₂O₃ and Fe₃O₄ to FeO and/or Fe. The Fe or FeO can then serve as co-reactants.

Other advantages of the present invention will be apparent to those skilled in the art from a careful reading of the Detailed Description of the Preferred Embodiment presented below and accompanied by the drawing.

### BRIEF DESCRIPTION OF THE DRAWING

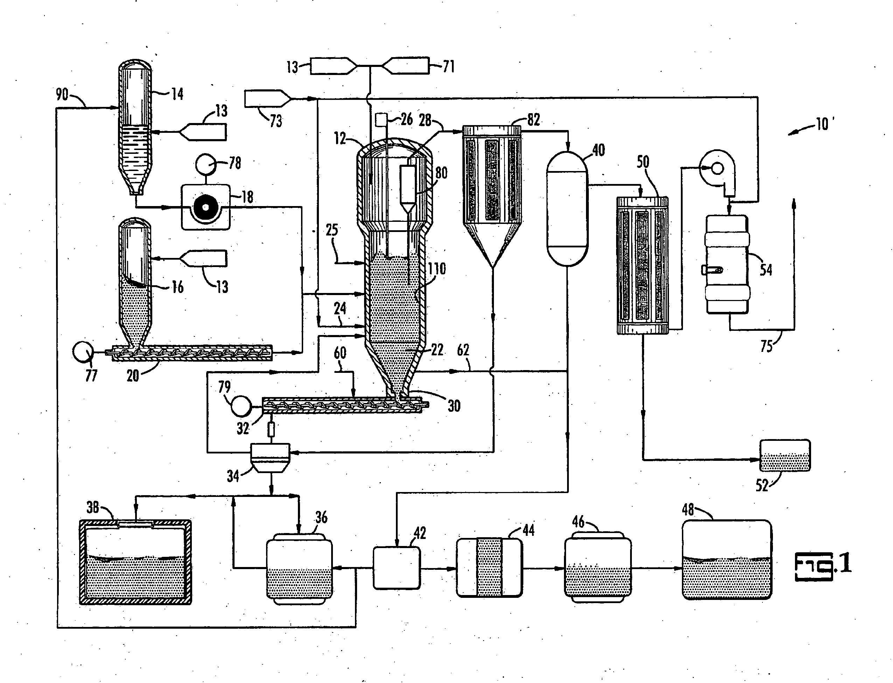

**FIG. 1** is a schematic illustration of a system for converting alkali metals, heavy metals, halogens, and sulfur into synthetic, naturally occurring minerals according to a preferred embodiment of the present invention.

### DETAILED DESCRIPTION OF PREFERRED EMBODIMENT

The present invention is a process for converting alkali metals, sulfur, and halogens into synthetic, naturally occurring minerals. The present process will be described in particular with respect to radioactive waste; however, any waste or product stream containing alkali metals; heavy metals, halogens, and/or sulfur can be processed in accordance with the following process and with the components of the system. The waste stream may also contain boron compounds and phosphates, and may have any concentration of alkali metals, sulfur, and/or halogens, and may also contain levels of heavy metals and radionuclides, but, preferably, only contains less than 5% carbonaceous or organic content. Accordingly, the waste feed make up mainly includes non-combustible and non-organic materials. Further, the waste feed can have any pH value, and need not be preprocessed before being introduced into the process.

The process is based on a fluidizing bed reaction vessel using steam 73 for fluidizing which may be operated under strongly reducing conditions or under strongly reducing conditions in combination with oxidizing conditions. Although the waste stream has little carbonaceous content, carbonaceous materials such as sugars, charcoal, and activated carbon, can be present in the fluidizing reaction vessel for use as the heat source to evaporate water in the waste feed and as a reducing agent, or reductant. Other fluidizing gases, reductants and/or co-reactants may be utilized to further optimize the reducing conditions in the reactor. Typical other fluidizing gases include: hydrogen, oxygen (when oxidizing conditions are desired), methane, ammonia, carbon dioxide, carbon monoxide, and inert gases. Further, the use of such co-reactants or additives as clay and lime results in higher melting point product, as well as the formation of water-insoluble minerals. Product handling and off gas handling from the process includes the use of wet scrubbers and various filters, separators, pumps, and blowers.

Referring now to **FIG. 1****,** there is shown a system according to a preferred embodiment of the present invention and generally indicated by reference number 10. System **10** includes a single reaction vessel **12.** Waste feeds, which may be comprised of liquids, liquid slurries and sludges **14** and/or solids **16,** are fed into the reaction vessel 12. In the case of the liquids, liquid slurries and sludges **14,** a pneumatic pump, perisalitic pump or progressive cavity **18** may be employed for delivery of the pumpable fluids to the reaction vessel **12.** In the case of the solids **16,** a screw auger **20** or pneumatic transfer system may be employed to deliver the solid waste stream into the reaction vessel **12.** Motors **77, 78** and **79** can be employed to drive the augers and the pumps of the present system.

As the method of the present invention addresses the mineralization of heterogenous wastes, the process centers on the addition of co-reactants and/or additives to the reaction vessel **12.** Co-reactants **13** such as lime, clay, kaolin clay, magnesium compounds, calcium compounds, aluminum compounds, phosphate compounds, and silica compounds are mixed with the heterogenous waste feed before it is introduced into reaction vessel. This mixing step allows the co-reactants **13** to bind the alkali metals, heavy metals, sulfur, and halogens into a stable mineral form. The mixing of the co-reactants **13** with the heterogenous waste before introducing these materials into the reaction vessel is a feature of the present invention. The mixing of the effective amount of co-reactants **13,** such as clay and lime, with wastes containing alkali metals, heavy metals, halogens, sulfur, boron, and phosphates, allows these waste materials to be bound in stable mineral form. Not only does this feature result in easier disposal of the heterogenous waste, but also the process results in little to no inventory of unreacted co-reactant in the reaction bed. Therefore, the overall product weight can be controlled and the co-reactants do not dilute the final products. Alternatively, co-reactants **13** may be added separately into reaction vessel **12** as shown in FIG. 1 without first mixing co-reactants **13** with the waste feed.

Preferably less than 10% by weight of unbound co-reactants are present in the reaction vessel **12** at any given time during the process. Accordingly, the amount of co-reactants within the fluid bed can be controlled so that the mineral products can be made to grow larger. However, the presence of small amounts of co-reactants can help prevent agglomeration to the point of ceasing the fluidization of the reactor.

As previously stated, the addition of co-reactants to form synthetic, naturally occurring minerals that are preferably water-insoluble, as well as to form higher melting point solid products, is another feature of the present invention. A problem faced in disposing of heterogenous waste such as that described in the present invention is that products formed by typical treatment processes are water-soluble. In the case that these water-soluble products also contain radioactive isotopes, additional stabilization of the products such as grouting, solidification, or vitrification, prior to disposal will be required to prevent water dissolution of the buried product into the ground water. Accordingly, the formation of water-insoluble minerals is both advantageous and desirable, because they are more easily disposed of and processed. It is also desirable to select and produce a product that is non-hygroscopic. The term non-hygroscopic refers to compounds that do not form hydrates. Solids that form hydrates, such as sodium carbonate, can swell over time and can rupture or damage the containers they are stored in.

In an effort to address these problems, the following products listed with their main elemental constituents for simplicity can be made in the present process through the addition of certain co-reactants: Nosean (Na-Al-Si-SO₄), Nepheline (Na-Al-Si), Fairchildite (K-Ca-CO₃), Natrofairchildite (Na-Ca-CO₃), Dawsonite (Na-Mg-CO₃), Eitelite (Na-Mg-CO₃), Shortite (Na-Ca-CO₃), Parantisite (Na-Ti-Si), Maricite (Na-Fe-PO₄), Buchwaldite (Na-Ca-PO₄), Bradleyite (Na-Mg-PO₄-CO₃), Combeite (Na-Ca-Si), Olenite (Na-Al-BO₃-Si), Dravite (Na-Mg-Al-BO₃-Si), as well as other compounds for which there are no common mineral names, such as Ca-Si, Na-PO₄, Na-Al-PO₄, Na-(Ca,Fe,Mg)-Si, Na-Al-PO₄, Na-Al, and Na-Mg-PO₄. Not only are many of these minerals desirable because they are water insoluble, but they can also help to further process such wastes as radioactive isotopes. For example, the product Nepheline forms a crystalline cage mineral structure that effectively binds larger atoms, such as radionuclides and heavy metals that may be present in the waste.

In order to produce these mineral compounds, the following co-reactants can be utilized with each co-reactant being added in the proportions needed to generate the desired higher melting point compound, and/or water insoluble compound. The addition of lime (CaO) or other Ca compound such as calcium carbonate or calcium nitrate provides the conversion of alkali metals to a Ca rich final product such as Fairchildite. The carbonate is provided by any CO₂ that is present in the reaction vessel **12.** The addition of magnesia (MgO) would produce minerals rich in magnesia, such as Eitelite. The addition of aluminum compounds such as kaolin clay and bentonite (alumina-silicates) can be used to produce Nepheline, Nosean, and other related sodium-alumina-silicates. The addition of other aluminum compounds such as aluminum nitrate, aluminum hydroxide, aluminum tri-hydrate (Al(OH)₃), or aluminum metal particles can be used to produce sodium aluminate. The addition of phosphate compounds can produce phosphate bonded ceramic media such as Maricite, Buchwaldite, Bradleyite or other PO₄ containing materials. The addition of silica compounds can be used to produce a sodium silicate product. The use of CO₂ to form a sodium carbonate product is also utilized in the present invention.

The use of co-reactants **13** is further advantageous because of the behavior of heavy metals, sulfur, and halogens in their presence. Co-reactants **13** can bind heavy metals, S, Cl, and F into solid sodium or calcium product matrix, or other non-volatile stable products. The resultant off-gas typically contains <5% of incoming S, Cl, and F. This high retention of normal acid gases in the solid product allows scrubber solutions to be recycled to the reaction vessel **12** thereby eliminating secondary scrubber solution waste. A specific co-reactant that can be used is lime. The S and halogens can be directly bonded by the addition of lime (CaO) to form CaSO₄ (gypsum) as a stable product or the S as SO₄ can be bound into the crystalline structure of certain mineral forms such as Nepheline thereby converting it to Nosean.

Another previously discussed advantage to the addition of co-reactants **13** is the formation of higher melting point compounds that will result in less agglomeration in the reaction vessel **12.** Although the formation of higher melting point compounds helps to prevent agglomeration in the reaction vessel, some agglomeration is preferred in the present invention to increase the size of the mineral products. However, it is not desirable to have agglomeration to the point of ceasing the fluidization of the reactor. Therefore, another feature of the present invention is to add only the appropriate amounts of co-reactant 13 to effectively mineralize the alkali metals, halogens, phosphates, boron compounds, and sulfur, and to also prevent agglomeration to the point of ceasing the fluidization of the reaction vessel **12.**

Preferably, the percentage of co-reactant **13** added to bind the alkali metals, heavy metals, boron compounds, phosphates, sulfur, and/or halogens is greater than a mole ratio of at least 30%, preferably 50%, with a more preferred range of 100% to 150%, to produce the desired mineral product. A 100% stoichiometric (mole) ratio would equal 1 mole of co-reactant to 2 moles respective waste product (alkali metal, halogen, or sulfur). For example, to produce Nepheline, the preferred amounts of co-reactant to waste compound are as follows: 1 to 1.25 moles Kaolin clay (Al₂O₃-2-SiO₂) with 2 moles of Na.

In addition to co-reactants **13,** fluidized media **22** may also be contained in reaction vessel **12.** Such fluidized media **22** may also include inert media, such as alumina beads, as well as carbonaceous materials, co-reactants, reductants, catalysts, product solids, such as sodium compound product, in addition to or in lieu of the inert media. Various combinations of these materials may be used in the reaction vessel **12.** For example, fluidized media **22** can include carbonaceous materials with product solids that have been formed during the process. The fluidized media **22** may further include catalysts, such as cerium, platinum, and palladium compounds, in combination with product solids. These catalysts **71** are useful in lowering the energy of activation required for the various reactions happening within the vessel **12.** For example, these catalysts **71** reduce the energy of activation required to reduce any NOx waste that may be present in the waste feed.

Metal catalysts may also be included in the reaction vessel when there is nitrate waste present. Testing has demonstrated the usefulness of metal reductant additions or catalysts to the bed to facilitate NOx reduction. Metal additives are not always required but are useful in maximizing NOx conversion to nitrogen gas. Typical metals that can be used include copper compounds, cobalt compounds, manganese compounds, iron compounds, or nickel compounds, such as nickel oxalate, oxides, or nitrates that can be co-injected with the waste feed in concentrations of less than 0.5% up to 20%. Alternatively, metals can be separately injected into the bed. The preferred bed will contain 5% to 10% metal reductants. Most preferably, fluidizing media **22** includes a combination of carbonaceous materials, catalysts, co-reactants, reductants, and product solids.

The use of inert bed material is another feature of the present invention and is preferred for the start-up of the process. Inert ceramic media such as silica, mullite, corundum, corderite, or alumina may serve as a heat sink. Preferably, amorphous alumina beads are used according to the preferred embodiment of the present invention. Other types of inert media, such as quartz or silica sand, tend to form agglomerations in the reaction vessels more easily than alumina. Specifically, amorphous alumina will not form eutectic salt/glasses that can form harmful agglomerates that affect reactor efficiency as when common silica sand or quartz sand is utilized. The amorphous alumina is also exceptionally strong and hard and resists attrition due to reaction bed friction and impact. Preferably, the size of the alumina beads is at least 200 and, most preferably up to 1000 microns in diameter; however, beads up to 5,000 microns in diameter can be utilized. Such size beads do not easily elutriate out of the vessel **12** and therefore minimize carryover.

Although the waste feed preferably contains less than 5% carbonaceous or organic content, carbonaceous materials are present in the reaction vessel **12** so as to provide a heat source and a reductant. Therefore, up to 20% carbonaceous or organic content may be present. The addition of charcoal or carbonaceous solids to the reaction bed in sizes ranging up to 0.5 inches in diameter is unique to the preferred embodiment. The large particles of carbon maintain a constant inventory of carbon that is not possible with typical fine sugars and organic powders or liquids. The presence of larger carbon solids together with the addition of soluble carbon in the form of formic acid, sugars, etc., provides superior reducing conditions. The presence of carbon compounds in the bed will produce highly reducing CO and H₂ in the bed via steam reformation. Additionally, carbonaceous reductants can be used to regenerate metal co-reactants and/or additives. For example, Fe₂O₃ and Fe₃O₄ are reduced to FeO and/or Fe through the use of carbonaceous reductants and hydrogen.

As previously stated, the use of at least one reducing zone or portion is a particular feature of the present invention. The use of a reducing zone is preferable so as to avoid incineration and/or burning operations. Further, it is believed that reducing conditions result in a higher retention of sulfur, halogens, and heavy metals in the mineralized product. These conditions are also preferable when the heterogeous waste contains nitrogen oxides. The reducing conditions convert these nitrogen oxides to N₂. [0036] Accordingly, in order to evaporate water present in the waste feeds and to serve as a heat source, charcoal, sugar and/or other carbonaceous materials are added to or included in reaction vessel **12.** Optionally, other chemical reducing agents or catalysts such as Fe, nickel oxalates, oxides, or nitrates, Cu, Co, and similar metals and metal oxides may be used.

Fluidizing gases are introduced into reaction vessel **12** via inlet **24.** Steam is preferred to combustion gases as the fluidizing gas because it is more reactive, and generates CO and H₂ that are highly reducing by steam reformation of carbonaceous materials. However, the fluidizing gases can also include steam with reducing or fuel gases (including methane, carbon monoxide, and hydrogen), mixtures of steam, reducing gases and/or fuel gases, steam with inert gas, and steam with inert gas and carbon dioxide. Optionally, oxygen may also be introduced through nozzle **25** so as to convert synthesis gases, CO and H₂, which can form flammable mixes, into CO₂ and H₂O prior to these gases exiting the reaction vessel. Steam can also be generated within reaction vessel **12** from the evaporation of water from the waste feed. Preferably, fluidizing gases can be recycled from the off-gas stream to save energy on the supply of fluidizing steam.

The reaction vessel **12** is preferably operated at a temperature less than 1000° C. Excessively high heat can volatize sulfur-containing compounds and some heavy metals, thereby separating them from the inorganic residues, volatize certain radionuclides and cause unwanted agglomerations in the reaction vessel. At an operating temperature of less than 800° C, the reaction vessel **12** materials are prevented from becoming molten.

Any off-gas (OG) that is formed by the reactions within the vessel **12,** including nitrogen gas, steam, other fluidizing gases, and fine particulates, pass through a reactor gas outlet **28** and to a scrubber/evaporator **40,** and is ultimately discharged through line **75.** Any non-gaseous residue or particulate collected in the scrubber/evaporator **40** is directed to residue separator **42** wherein the insoluble residue are separated from the soluble salt solution. The residue product is directed to the stabilization processor **36** or recycled to waste feed **14** while the salt solution is directed to salt separator **44** then to a salt dryer **46** and finally to a salt package **48.** An optional filter **82** can be installed between the reactor gas outlet **28** and the scrubber/evaporator **40.** Solids and fines in the off-gas stream collected by the optional filter **82** can be directed to product collector **34** or stabilization processor **36.** However, downstream filter **82** need not be included if solids are separated from scrubber solution in scrubber **40.** The scrubber solution may also be recycled to the waste feed through inlet **90** for incorporation of the solids and salts into solid products. These separated solids from the scrubber **40** may be introduced to the waste feed through an inlet **90.** The cooled and scrubbed off-gas and water vapors then pass to condenser **50.** The resultant water is directed to the recycled water tank **52** while the off-gas moves to optional thermal converter **54.** Off-gases from the thermal converter **54** are then monitored for compliance with the applicable environmental requirements prior to release.

Fine solid products are also largely retained in the reaction vessel **12** by means of a solids separation device built into reaction vessel **12,** such as a cyclone **80** (shown in FIG. 1), or a filter. Other small sized products, including entrained particulates also leave via port 28 and can thereafter be recycled to reaction vessel **12.** Heavier solids and debris leave via port **30** and are carried away by screw auger **32** to optional collector **34.** Auger **32** is preferably water or gas cooled. From collector **34** the larger solids and debris may be directed to stabilization processor **36** or to final product waste collector **38.**

Preferably, collector **34** includes a metal separator, pneumatic classifier, and/or a screen separator for the recycling of metal reductants, catalysts and carbonaceous reductants. In the case that reaction vessel **12** contains only product particles and no alumina beads, a simple magnetic separator could separate iron-metal based reductants/catalysts from product for recycling of the reductants/catalysts to the reaction vessel **12.**

The screw auger **32** can be optionally fitted with water washing capability. Water can be introduced into the bottom of screw auger **32** through inlet **60.** Water dissolves any soluble sodium salt or other agglomerates that collect in the bottom of the reactor vessel **12.** Salt water solution is removed from the bottom of reactor vessel **12** through screened outlet port **62.** If desired, the salt water solution from outlet **62** can be collected in residue separator **42.**

It will be apparent to those skilled in the art of processing alkali metal-, heavy metal-, halogen-, boron-, and phosphate-, and sulfur-containing waste feeds that many modifications and substitutions can be made to the preferred embodiment described above without departing from the scope of the present invention, which is defined by the appended claims.

## Claims

1. A method for converting alkali metals, phosphates, boron compounds, heavy metals, halogens, sulfur and sulfur compounds into synthetic, naturally occurring mineral products, comprising:
providing a waste material comprising at least one of an alkali metal, a phosphate, a boron compound, a heavy metal, a halogen, sulfur or a sulfur compound, and a nitrate;
providing a reaction vessel containing a reaction bed, wherein at least one portion of said reaction bed is operated under reducing conditions, and wherein said reaction bed contains at least one catalyst;
heating said reaction vessel to an operating temperature of at least 100°C;
mixing said waste material with a co-reactant;
introducing a fluidizing gas, to form a mineral product comprising at least one of Nosean, Nepheline, Fairchildite, Natrofairchildite, Dawsonite, Eitelite, Shortite, Parantisite, Maricite, Buchwaldite, Bradleyite, Combeite, Olenite, Dravite, Ca-Si, NaPO₄, Na-Al-PO₄, Na-(Ca,Fe,Mg)-Si, Na-Al-PO₄, Na-Al, Na-Mg-PO₄ and related mineral forms; and
removing said mineral product from said reaction vessel.

2. The method as recited in claim 1, wherein said at least one catalyst is selected from a group consisting of iron compounds, copper compounds, cobalt compounds, manganese compounds, nickel compounds, cerium compounds, palladium compounds, and platinum compounds.

3. The method as recited in claim 1 wherein said fluidizing gas is selected from a group consisting of steam, carbon dioxide, carbon monoxide, hydrogen, nitrogen, methane, and oxygen.

4. The method as recited in claim 1, wherein said mineral product has a higher melting point than said waste component.

## Patentansprüche

1. Verfahren zur Umwandlung von Alkalimetallen, Phosphaten, Borverbindungen, Schwermetallen, Halogenen, Schwefel und Schwefelverbindungen in synthetische, natürlich vorkommende Mineralprodukte, bei dem man:
ein Abfallmaterial, das ein Alkalimetall, ein Phosphat, eine Borverbindung, ein Schwermetall, ein Halogen, Schwefel und/oder eine Schwefelverbindung und ein Nitrat umfasst, bereitstellt;
ein Reaktionsgefäß mit einem Reaktionsbett bereitstellt, wobei mindestens ein Teil des Reaktionsbetts unter reduzierenden Bedingungen betrieben wird und wobei das Reaktionsbett mindestens einen Katalysator enthält;
das Reaktionsgefäß auf eine Betriebstemperatur von mindestens 100°C erhitzt;
das Abfallmaterial mit einem Coreaktanten mischt;
ein Verwirbelungsgas einträgt, um ein Mineralprodukt zu bilden, das mindestens ein Mineral aus der Reihe Nosean, Nephelin, Fairchildit, Natrofairchildit, Dawsonit, Eitelit, Shortit, Parantisit, Maricit, Buchwaldit, Bradleyit, Combeit, Olenit, Dravit, Ca-Si, NaPO₄, Na-Al-PO₄, Na-(Ca,Fe,Mg)-Si, Na-Al-PO₄, Na-Al, Na-Mg-PO₄ und verwandte Mineralformen umfasst; und
das Mineralprodukt aus dem Reaktionsgefäß austrägt.

2. Verfahren nach Anspruch 1, bei dem der mindestens eine Katalysator aus der Gruppe bestehend aus Eisenverbindungen, Kupferverbindungen, Cobaltverbindungen, Manganverbindungen, Nickelverbindungen, Cerverbindungen, Palladiumverbindungen und Platinverbindungen ausgewählt wird.

3. Verfahren nach Anspruch 1, bei dem das Verwirbelungsgas aus der Gruppe bestehend aus Wasserdampf, Kohlendioxid, Kohlenmonoxid, Wasserstoff, Stickstoff, Methan und Sauerstoff ausgewählt wird.

4. Verfahren nach Anspruch 1, bei dem das Mineralprodukt einen höheren Schmelzpunkt als die Abfallkomponente aufweist.

## Revendications

1. Procédé pour convertir des métaux alcalins, des phosphates, des composés de bore, des métaux lourds, des halogènes, du soufre et des composés de soufre en produits minéraux synthétiques survenant naturellement, comprenant les étapes suivantes:
fournir une matière de déchet comprenant au moins un composant parmi un métal alcalin, un phosphate, un composé de bore, un métal lourd, un halogène, du soufre ou un composés de soufre, et un nitrate;
prévoir une cuve de réaction contenant un lit de réaction, dans lequel au moins une partie dudit lit de réaction est utilisée dans des conditions réductrices, et dans lequel ledit lit de réaction contient au moins un catalyseur;
chauffer ladite cuve de réaction à une température de fonctionnement d'au moins 100°C;
mélanger ladite matière de déchet avec un co-réactif;
introduire un gaz de fluidisation afin de former un produit minéral comprenant au moins un parmi la noséane, la néphéline, la fairchildite, la natrofairchildite, la dawsonite, l'éitélite, la shortite, la parantisite, la maricite, la buchwaldite, la bradleyite, la combéite, l'olénite, la dravite, le Ca-Si, le NaPO₄, le Na-Al-PO₄, le Na-(Ca,Fe,Mg)-Si, le Na-Al-PO₄, le Na-Al, le Na-Mg-PO₄ ainsi que des formes minérales associées; et
enlever ledit produit minéral de ladite cuve de réaction.

2. Procédé selon la revendication 1, dans lequel ledit au moins un catalyseur est sélectionné dans un groupe comprenant des composés de fer, des composés de cuivre, des composés de cobalt, des composés de manganèse, des composés de nickel, des composés de cérium, des composés de palladium et des composés de platine.

3. Procédé selon la revendication 1, dans lequel ledit gaz de fluidisation est sélectionné dans un groupe comprenant la vapeur, le dioxyde de carbone, le monoxyde de carbone, l'hydrogène, l'azote, le méthane et l'oxygène.

4. Procédé selon la revendication 1, dans lequel le point de fusion dudit produit minéral est plus élevé que celui dudit composant de déchet.
